# FASCICULE DE BREVET EUROPEEN

(11) **EP 1 003 052 B1**
(45) Date de publication et mention de la délivrance du brevet: **14.07.2004**
(21) Numéro de dépôt: 99402844.7
(22) Date de dépôt: 17.11.1999
(51) Int. Cl.: G01V 1/00

(54) **Système de surveillance d'une carrière souterraine**
System zur Überwachung von einer untererdische Grube
Underground mine surveillance system

(30) Priorité: 20.11.1998 FR 9814629
(43) Date de publication de la demande: 24.05.2000
(73) Titulaire: COMPAGNIE DU SOL, 92000 Nanterre (FR)
(72) Inventeur: Gastine, Eric, 92000 Nanterre (FR); Auclair, Sébastien, 92000 Nanterre (FR)
(74) Mandataire: Dronne, Guy

(56) Documents cités:
- EP-A- 0 213 619
- WO-A-95/12135
- US-A- 3 949 353
- US-A- 4 535 629
- US-A- 4 649 524
- US-A- 5 377 104
- US-A- 5 798 457

## Description

La présente invention a pour objet un système de surveillance d'une carrière souterraine.

On sait qu'il existe un grand nombre de carrières souterraines qui ne sont plus en exploitation. On comprend que, quelles que soient les précautions qui ont été prises à la fin de l'exploitation de ces carrières, celles-ci fragilisent considérablement le sol dans la zone où elles ont été creusées. On comprend également que, si ces carrières se trouvent dans des zones urbaines à forte concentration de constructions, l'effondrement de ces carrières ou la destruction partielle de leur plafond, piliers ou hagues peuvent entraîner des dommages considérables aux constructions réalisées au-dessus de la carrière.

Pour surveiller l'évolution de ces carrières et, plus précisément, de la résistance mécanique de leur plafond, la première solution utilisée consiste dans des inspections visuelles périodiques de ces carrières. On comprend qu'une telle solution est peu satisfaisante puisqu'elle ne peut se faire qu'avec une périodicité relativement élevée, qu'elle est liée à la compétence et l'expérience de la personne qui effectue la surveillance et que, de toute manière, elle est d'un coût important.

Pour remédier à cet inconvénient, on a proposé de disposer à certains emplacements de la carrière souterraine à surveiller des capteurs de contrainte ou des capteurs dimensionnels. Ces capteurs peuvent par exemple consister en des "cannes de convergence" verticales interposées entre le plafond de la carrière et le sol et dont on mesure le raccourcissement. On peut également placer des jauges de contraintes par exemple sur certains piliers verticaux qui ont subsisté lors du creusement de cette carrière. On comprend qu'avec une telle solution, même en multipliant les capteurs de contraintes mécaniques, les contrôles ne peuvent porter que sur des zones très localisées de la carrière. De plus, lorsque la carrière présente une superficie importante, il faudrait multiplier le nombre de capteurs, ce qui rend la gestion globale de l'installation de surveillance très complexe et très onéreuse tout en fournissant des informations qui ne sont que ponctuelles comme on l'a déjà indiqué.

On a également proposé dans le US 4 649 524 un système de surveillance d'une carrière souterraine, comportant des capteurs acoustiques ou sismiques disposés dans la carrière. Des moyens de traitement permettent de détecter la survenance d'un événement caractéristique. Pour cela, on calcule périodiquement l'énergie dans le signal et on compare l'énergie à un seuil qui peut être fixe ou variable. Cependant, ce document n'indique pas comment on détermine ce seuil lorsqu'il est variable.

On comprend donc qu'il existe un réel besoin de disposer d'une installation de surveillance de carrières souterraines non exploitées qui permette un contrôle global de l'ensemble de la carrière souterraine et qui permette de détecter plus efficacement et automatiquement et d'enregistrer la survenance d'événements caractéristiques précurseurs d'une altération sérieuse du plafond de la carrière ou de ses piliers.

Pour atteindre ce but, selon l'invention, le système de surveillance d'une carrière souterraine comprend :
- N capteurs acoustiques ou sismiques (Cₖ) disposés dans ladite carrière, chaque capteur délivrant un signal représentatif de l'amplitude du signal acoustique ou sismique qu'il reçoit ; et
- des moyens de traitement des signaux délivrés par chaque capteur pour en déduire l'éventuelle survenance dans ladite carrière d'un événement caractéristique, lesdits moyens de traitement comprenant des moyens pour calculer l'énergie contenue dans ledit signal représentatif pendant des périodes T par quoi on obtient une information de bruit B ; ledit système étant caractérisé en ce qu'il comprend en outre :

- des moyens pour calculer l'énergie contenue dans ledit signal représentatif pendant des périodes T' avec T' = T/k, k entier supérieur à 1, par quoi on obtient une information d'énergie E
- des moyens pour calculer le rapport R entre l'information d'énergie E et l'information de bruit B, et pour comparer la valeur R dudit rapport à un seuil S prédéterminé ; les périodes T' de calcul de l'information d'énergie (E) correspondent à des portions du signal représentatif successives juxtaposées et les périodes T de calcul de l'information de bruit (B) correspondent à des portions du signal représentatif successives décalées d'un pas égal à T' ; et
- des moyens pour mémoriser l'information d'énergie E si la valeur R du rapport est supérieure au seuil S.

On comprend que, grâce à l'utilisation de capteurs acoustiques ou sismiques, on peut, en plaçant judicieusement ceux-ci dans la carrière, réaliser une surveillance globale de celle-ci grâce à la propagation des sons dans cette carrière, ces sons étant caractéristiques de la survenance de certains événements tels que la chute de blocs du plafond de la carrière ou la survenance de fissurations dans ce plafond ou dans des piliers de la carrière ou encore l'effondrement de hagues. De plus, les moyens de traitement des signaux délivrés par les capteurs permettent d'utiliser un seuil de détection correspondant au bruit effectif. De plus, la mémorisation des informations représentatives des seuls événements caractéristiques permet de diminuer considérablement la quantité d'informations à mémoriser et donc de réaliser une surveillance de la carrière en temps réel.

Selon un mode de mise en oeuvre préféré, les moyens de traitement du système de surveillance sont définis pour fonctionner en temps réel.

Selon une autre caractéristique de l'invention, le traitement des signaux délivrés par les capteurs est basé sur le calcul de l'énergie contenue dans ces signaux pendant des périodes de temps prédéterminées. L'utilisation de l'énergie contenue dans ces signaux permet d'obtenir effectivement une détection efficace de la survenance d'événements caractéristiques et de fournir à l'interprétation des grandeurs quantifiées cumulables.

Selon une caractéristique préférée de l'invention, la discrimination en énergie est réalisée pour chaque capteur dans différentes bandes de fréquence du signal acoustique. La combinaison de l'information d'énergie et de l'information relative à la plage de fréquence dans laquelle cette énergie est mesurée permet d'obtenir une information complète et facilement utilisable quant à la survenance des événements caractéristiques à l'intérieur de la carrière souterraine.

D'autres caractéristiques et avantages de l'invention apparaîtront mieux à la lecture de la description qui suit de plusieurs modes de mise en oeuvre de l'invention donnés à titre d'exemples non limitatifs.

La description se réfère aux figures annexées sur lesquelles :
- la figure 1 est une vue montrant les différentes parties du système de surveillance d'une carrière ;
- la figure 2 est un schéma simplifié de l'ensemble du système de surveillance de la carrière ; et
- la figure 3 est un synopsis simplifié montrant les différentes étapes de traitement mis en oeuvre par le système de surveillance de carrière selon l'invention.

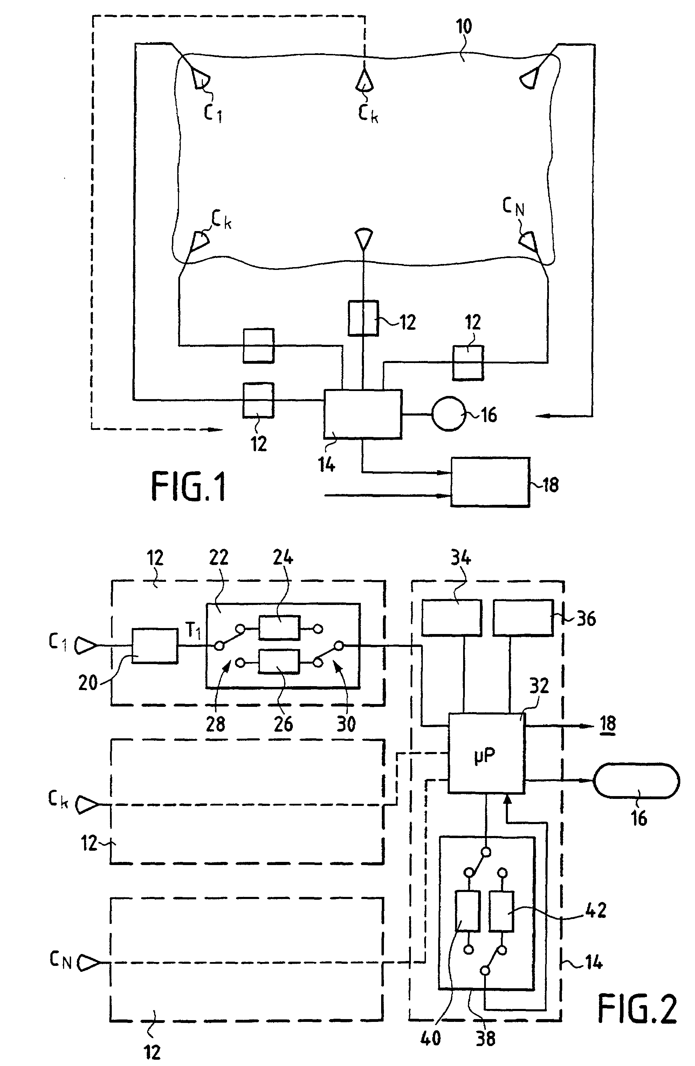

En se référant tout d'abord à la figure 1, on va décrire l'ensemble du système de surveillance de la carrière souterraine référencée 10 sur cette figure.

Le système comprend N capteurs Cₖ disposés judicieusement à l'intérieur de la carrière souterraine. Ces capteurs peuvent être soit des capteurs acoustiques du type microphone, soit des capteurs sismiques du type géophone ou une combinaison des deux. Dans le premier cas, les capteurs peuvent recueillir les signaux acoustiques émis directement par la survenance d'événements tels que la chute de blocs du plafond de la carrière ou le fissurage de piliers ou encore l'effondrement de hagues. Dans le cas des géophones, ceux-ci recueillent le signal sismique transmis par le sol et les parois de la carrière en réponse à la survenance d'un tel événement. On comprend que dans les deux cas, les capteurs acoustiques ou sismiques permettent de recueillir des signaux représentatifs de la survenance des événements dans l'ensemble de la carrière que l'on surveille.

Chaque capteur est raccordé à un circuit d'interface 12 qui permet essentiellement de convertir le signal analogique délivré par chaque capteur en un signal numérique tout en réalisant pour cela un échantillonnage préalable du signal analogique. Chaque circuit d'interface permet également un stockage temporaire des informations ainsi reçues pour permettre le traitement en temps réel de ces informations ainsi qu'on l'expliquera ultérieurement. Les circuits d'interface 12 sont raccordés à un ensemble de traitement 14 qui permet, en réponse au traitement des signaux délivrés par les circuits d'interface 12, d'en extraire ceux qui sont représentatifs de la survenance d'un événement dans la carrière et de stocker et cumuler ces informations représentatives dans une mémoire générale 16. Périodiquement les informations cumulées et stockées dans la mémoire 16 peuvent être transmises à un ensemble centralisé de surveillance 18 qui peut également recevoir des informations similaires d'un autre système de surveillance d'une autre carrière ou d'une autre portion de la carrière lorsque celle-ci est de dimension importante.

En se référant maintenant à la figure 2, on va décrire les différents circuits qui constituent le système de surveillance de la carrière 10.

Chaque circuit d'interface 12 est constitué essentiellement par un dispositif d'échantillonnage et de conversion analogique numérique 20 des signaux analogiques délivrés par le capteur C associé. A la sortie du circuit 20, on a donc une succession d'informations numériques représentatives de l'amplitude du signal acoustique ou sismique recueilli par le capteur aux différents instants d'échantillonnage. Le circuit 12 comporte également un ensemble de mémorisation 22 constitué par deux mémoires tampons 24 et 26 qui permettent le traitement des informations en temps réel par l'ensemble de traitement 14. Chaque mémoire tampon 24 et 26 est reliée alternativement à la sortie du dispositif de numérisation 20 et la sortie de chaque mémoire 24 et 26 est également reliée alternativement à l'entrée de l'ensemble de traitement 14. On a symbolisé ces liaisons par deux commutateurs physiques 28 et 30 mais il est entendu que ces commutations sont mises en oeuvre par des moyens informatiques. La périodicité de commutation entre les deux mémoires 24 et 26 est appelée T₁. On comprend que, grâce à ce système, pendant qu'une des deux mémoires stocke pendant le temps T₁ les informations numériques délivrées par le circuit 20, l'autre mémoire est reliée aux moyens de traitement 14.

Dans la description précédente, on a considéré qu'il y avait autant de circuits d'interface 12 que de capteurs. Il va de soi qu'on ne sortirait pas de l'invention s'il y avait un seul circuit d'interface recevant les signaux délivrés par les N capteurs. Le circuit unique d'échantillonnage recevrait alors les N signaux multipléxés.

De même, il serait prévu une seule paire de mémoires tampons pour stocker alternativement les informations multiplexées délivrées par l'échantillonneur convertisseur analogique-numérique.

Il va également de soi que, si les capteurs 12 sont équipés de leur propres circuits de numérisation du signal, le ou les circuits d'interface 12 comprendront uniquement les mémoires tampons.

Le dispositif de traitement 14 proprement dit est constitué par un microprocesseur 32 associé à un ensemble de mémoires. Sur cette figure, on a représenté une mémoire non volatile de programme 34 pour stocker de façon permanente les sous-programmes qui seront exécutés par le microprocesseur 32, une mémoire de dynamique de travail 36, par exemple du type RAM et, un ensemble de mémoires intermédiaires 38 pour mémoriser les informations résultant du traitement par le microprocesseur 32.

Afin de permettre un traitement en temps réel de ces informations, l'ensemble de mémoire 38 est constitué par deux zones mémoires séparées 40 et 42 qui peuvent être reliées alternativement au microprocesseur 32 avec une périodicité D très supérieure à la période T pour stocker les informations au fur et à mesure de leur traitement, l'autre mémoire étant reliée au microprocesseur 32 pour effectuer une opération de réarrangement des données dans la mémoire 42. Après ce travail de réarrangement, il est possible de cumuler les informations de même nature et de les transférer dans la mémoire générale 16.

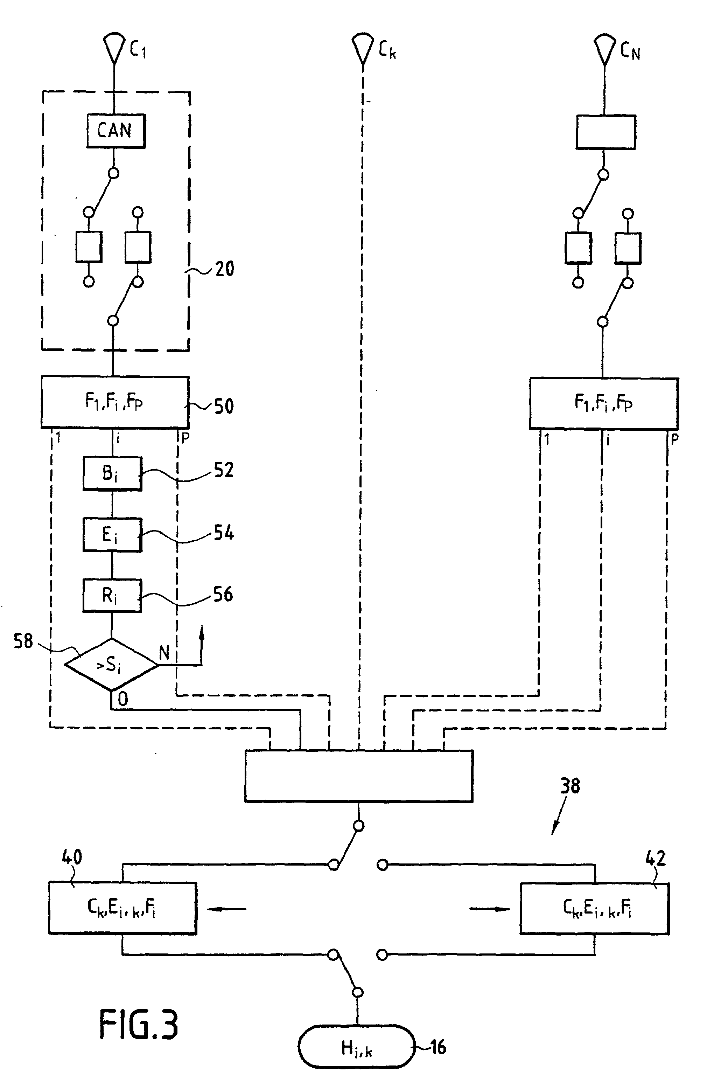

En se référant maintenant à la figure 3, on va décrire les différentes ) étapes du traitement des informations réalisées par le dispositif 14.

Sur cette figure on a représenté les différents capteurs Cₖ et les circuits d'interfaces 20 qui ne seront pas décrits à nouveau. La première phase de traitement des informations est donc la même pour chacun des signaux numérisés associés à un capteur. On décrira donc seulement les opérations de traitement réalisées, par exemple sur les signaux associés aux capteurs C₁.

La première étape de traitement symbolisée par la référence 50 consiste en un filtrage des informations numériques contenues dans une des mémoires tampons 24 ou 26. Ces moyens de filtrage numérique permettent de filtrer le signal selon P bandes de fréquence. Par exemple, on utilisera cinq bandes ) de fréquence également réparties entre 0 et 300 Hz et de préférence entre 0 et 250 Hz. Après l'étape de filtrage 50 on obtient donc P séries d'informations correspondant à la valeur numérique du signal reçu dans chacune des P bandes de fréquence. Le traitement appliqué pour chaque série d'informations filtrées étant le même, on décrira le traitement pour la série d'informations correspondant à la bande de filtrage Fᵢ.

Avant de décrire en détails les différentes étapes de traitement , on va en exposer le principe. Ce principe consiste à calculer d'abord une valeur de bruit sur une durée T, cette valeur de bruit Bᵢ correspondant à l'énergie contenue dans le signal pendant la durée T. On calcule également pour des périodes T' l'énergie contenue dans le signal pendant une durée T' et l'on calcule le rapport Rᵢ entre l'énergie Eᵢ et le bruit Bᵢ. Si ce rapport est supérieur à un seuil Sᵢ on considérera que pendant la durée T' correspondante un événement caractéristique est survenu dans la carrière et l'énergie Eᵢ est mémorisée. Dans le cas contraire le signal correspondant à cette durée T' sera ignoré.

Ainsi le calcul du bruit Bᵢ est effectué sur des périodes successives de durée T décalées les unes des autres de T'. Il faut ajouter que la période T₁ associée aux mémoires tampons est sensiblement égale à la période T. De plus la période T est égale à k T', k étant un nombre entier supérieur à 1. Dans l'exemple considéré k = 10. Plus généralement k est compris entre 5 et 15.

A l'étape 52 représentée sur la figure 3, le microprocesseur 32 exécute un sous-programme contenu dans la mémoire 34 pour calculer l'énergie contenue dans le signal filtré pendant la durée T afin d'obtenir une information de bruit Bᵢ et à l'étape 54 le microprocesseur exécute un autre sous-programme contenu dans la mémoire 34 pour calculer l'énergie contenue dans le signal filtré pendant une durée T'. Puis à l'étape 56, le microprocesseur 32, à l'aide d'un sous-programme toujours stocké dans la mémoire 34, calcule le rapport Rᵢ entre l'énergie Eᵢ et le bruit Bᵢ . A l'étape 28, le microprocesseur 32 compare le rapport Rᵢ à un seuil préétabli Sᵢ . Si le rapport Rᵢ est supérieur au seuil Sᵢ l'énergie calculée Eᵢ est stockée dans l'ensemble de mémoires 38 par exemple dans la mémoire 40 avec de plus l'indication du capteur de mesure Cₖ et la fréquence correspondante Fᵢ. En revanche si la valeur du rapport Rᵢ est inférieure au seuil, l'énergie Eᵢ n'est pas mémorisée. On stocke ainsi dans la portion de mémoire 40 les suites d'informations relatives aux énergies pour les différents capteurs et les différentes bandes de fréquence correspondant à la survenance d'événements caractéristiques. Pour permettre le traitement des informations en temps réel, la mémoire 38 est divisée en deux sous mémoires 40 et 42, chacune des sous mémoires étant aptes à recevoir les informations d'énergie pendant des périodes alternées D. En d'autres termes, pendant une période D les informations sont stockées dans la portion de mémoire 40 pendant que l'autre portion de mémoire 42 est isolée pour permettre un réarrangement des informations qui y ont été stockées pendant la période D précédente. Les informations réarrangées dans la mémoire 42 sont traitées par le microprocesseur 32 pour calculer le cumul des informations d'énergie correspondant à un même capteur et à une même bande de fréquence. Ces informations cumulées H_{i,k} sont alors transférées dans la mémoire générale 16. Durant la période suivante D les informations seront stockées dans la mémoire 42 tandis que les informations stockées dans la mémoire 40 feront l'objet d'un réarrangement et d'un calcul de cumul en vue de leur transfert dans la mémoire générale 16.

On comprend que les informations d'énergie cumulées H_{i,k} qui représentent donc des cumuls d'énergie dans une des bandes de fréquence pour un des capteurs permettent de déterminer de façon relativement précise la survenance des événements caractéristiques ainsi que leur localisation et leur qualification pour permettre la surveillance de l'ensemble de la carrière souterraine.

On voit également que grâce au traitement en temps réel des signaux délivrés par les capteurs acoustiques ou sismiques, il est possible d'en extraire les informations utiles pour effectuer une surveillance continue de l'ensemble de la carrière souterraine tant en utilisant des moyens de traitement, notamment informatiques, de dimensions acceptables pour une telle installation.

## Revendications

1. Système de surveillance d'une carrière souterraine comprenant :
- N capteurs acoustiques ou sismiques (Cₖ) disposés dans ladite carrière, chaque capteur délivrant un signal représentatif de l'amplitude du signal acoustique ou sismique qu'il reçoit ; et
- des moyens de traitement des signaux délivrés par chaque capteur pour en déduire l'éventuelle survenance dans ladite carrière d'un événement caractéristique, lesdits moyens de traitement comprenant des moyens pour calculer l'énergie contenue dans ledit signal représentatif pendant des périodes T par quoi on obtient une information de bruit B ; ledit système étant **caractérisé en ce qu'**il comprend en outre :
- des moyens pour calculer l'énergie contenue dans ledit signal représentatif pendant des périodes T'avec T' = T/k, k entier supérieur à 1, par quoi on obtient une information d'énergie E ;
- des moyens pour calculer le rapport R entre l'information d'énergie E et l'information de bruit B, et pour comparer la valeur R dudit rapport à un seuil S prédéterminé ; les périodes T' de calcul de l'information d'énergie (E) correspondent à des portions du signal représentatif successives juxtaposées et les périodes T de calcul de l'information de bruit (B) correspondent à des portions du signal représentatif successives décalées d'un pas égal à T' ; et
- des moyens pour mémoriser l'information d'énergie E si la valeur R du rapport est supérieure au seuil S.

2. Système selon la revendication 1, **caractérisé en ce que** lesdits moyens de traitement sont définis pour fonctionner en temps réel.

3. Système selon l'une quelconque des revendications 1 et 2, **caractérisé en ce qu'**il comprend en outre P moyens de filtrage centrés chacun sur des fréquences différentes, pour filtrer le signal représentatif délivré par chaque capteur, par quoi on obtient P signaux filtrés, et **en ce que** :
- les moyens de calcul d'énergie, calculent l'énergie pendant les périodes T et T' pour chacun des P signaux filtrés, par quoi on obtient P informations de buit Bᵢ et P informations d'énergie Eᵢ
- les moyens de calcul du rapport R et de comparaison calculent P rapports Rᵢ et comparent lesdits rapports à des seuils Sᵢ
- les moyens de mémorisation mémorisent les informations d'énergie Eᵢ si la valeur du rapport Rᵢ est supérieure à Sᵢ et l'information relative au filtre correspondant.

4. Système selon l'une quelconque des revendications 1 à 3, **caractérisé en ce qu'**il comprend en outre :
- des moyens pour cumuler les informations d'énergie (E, Eᵢ) mémorisées pendant une durée D, par quoi on obtient des informations d'énergie cumulée (H, Hᵢ) ; et
- des moyens pour stocker lesdites informations d'énergie cumulée.

5. Système selon l'une quelconque des revendications 1 à 4, **caractérisé en ce qu'**il comprend en outre, pour chaque capteur, deux mémoires tampons aptes à mémoriser des informations numériques correspondant au signal représentatif délivré par le capteur, des moyens pour relier alternativement ledit capteur à la première et à la deuxième mémoire tampon pendant des périodes T₁ et des moyens pour relier alternativement auxdits moyens de traitement pendant des périodes T₁ celle des mémoires tampons qui n'est pas reliée au capteur.

6. Système selon l'une quelconque des revendications 1 à 4, **caractérisé en ce qu'**il comprend en outre deux mémoires tampons aptes à mémoriser les informations numériques correspondant aux signaux représentatifs délivrés par les capteurs sous forme multipléxée, des moyens pour relier alternativement lesdits capteurs à la première et à la deuxième mémoire tampon pendant des périodes T₁ et des moyens pour relier alternativement auxdits moyens de traitement pendant des périodes T₁ celle des mémoires tampons qui n'est pas reliée au capteur.

7. Système selon les revendications 5 et 6, **caractérisé en ce que** ladite période T₁ est sensiblement égale à la période T.

8. Système selon l'une quelconque des revendications 1 à 7, **caractérisé en ce que** le rapport k entre les périodes T et T' est compris entre 5 et 15.

9. Système selon la revendication 3, **caractérisé en ce que** les bandes passantes des P moyens de filtrage sont comprises dans le domaine allant de 0 à 300 Hertz.

## Patentansprüche

1. System zur Überwachung einer unterirdischen Grube mit
- N akustischen oder seismischen, in der Grube angeordneten Messaufnehmern (Cₖ), von denen jeder ein Signal abgibt, das für dasjenige akustische oder seismische Signal, welches er aufgenommen hat, repräsentativ ist; und mit
- Verarbeitungsmitteln für die von jedem Messaufnehmer gelieferten Signale, um aus diesen das mögliche Eintreten eines charakteristischen Ereignisses in der Grube ableiten zu können, wobei die Verarbeitungsmittel Mittel zur Berechnung der in dem Signal während Zeitspannen T enthaltenen Energie aufweisen, wodurch eine Geräuschinformation B erhalten wird; wobei das besagte System **dadurch gekennzeichnet ist, dass** es außerdem die folgenden Merkmale aufweist:
- Mittel zur Berechnung der in dem repräsentativen Signal während Zeitspannen T' enthaltenen Energie, mit T' = T/k wobei k immer größer als 1 ist, wodurch eine Energieinformation E erhalten wird;
- Mittel zur Berechnung der Beziehung R zwischen der Energieinformation E und der Geräuschinformation B und zum Vergleich des Wertes R dieser Beziehung mit einem vorbestimmten Schwellenwert S, wobei die Zeitspannen T' der Berechnung der Energieinformation (E) aufeinanderfolgenden, nebeneinanderliegenden Teilstücken des repräsentativen Signals und die Zeitspannen T der Berechnung der Geräuschinformation (B) aufeinanderfolgenden, um einen Betrag T' versetzten Teilstücken des repräsentativen Signals entsprechen; und
- Mittel zum Speichern der Energieinformation E, falls der Wert R der Beziehung größer als der Schwellwert S ist.

2. System nach Anspruch 1, **dadurch gekennzeichnet, dass** die Verarbeitungsmittel dazu bestimmt sind, in Echtzeit zu funktionieren.

3. System nach Anspruch 1 oder 2, **dadurch gekennzeichnet, dass** es überdies P Filtermittel aufweist, die jeweils um unterschiedliche Frequenzen angeordnet sind, so dass das durch jeden Messaufnehmer gelieferte repräsentative Signal filterbar ist, wodurch P gefilterte Signale erhalten werden und dass
- die Energieberechnungsmittel die Energie während der Zeitspannen T und T' für jedes der P gefilterten Signale berechnen, wodurch P Geräuschinformationen Bᵢ und P Energieinformationen Eᵢ erhalten werden,
- die Mittel zur Berechnung der Beziehung R und zum Vergleich P Beziehungen Rᵢ berechnen und diese Beziehungen mit Schwellwerten Sᵢ vergleichen und
- die Speichermittel, wenn der Wert der Beziehung Rᵢ größer als Sᵢ ist, die Energieinformationen Eᵢ und die Bezugsinformation für den entsprechenden Filter speichern.

4. System nach einem der Ansprüche 1 bis 3, **dadurch gekennzeichnet, dass** es überdies folgende Merkmale aufweist:
- Mittel zur Kumulation von während einer Zeitdauer D gespeicherten Energieinformationen (E, Eᵢ), wodurch eine kumulierte Energieinformation (H, Hᵢ) erhalten wird; und
- Mittel zur Speicherung dieser kumulierten Energieinformation.

5. System nach einem der Ansprüche 1 bis 4, **dadurch gekennzeichnet, dass** es überdies für jeden Messaufnehmer zwei geeignete Pufferspeicher zur Speicherung von numerischen Informationen, die dem durch den Messaufnehmer gelieferten repräsentativen Signal entsprechenden, aufweist und Mittel, um den Messaufnehmer während Zeitspannen Tᵢ abwechselnd mit dem ersten und dem zweiten Pufferspeicher zu verbinden sowie Mittel, um während der Zeitspannen Tᵢ denjenigen der Pufferspeicher, der nicht mit dem Messaufnehmer verbunden ist, mit den besagten Verarbeitungsmitteln zu verbinden.

6. System nach einem der Ansprüche 1 bis 4, **dadurch gekennzeichnet, dass** es überdies zwei geeignete Pufferspeicher zur Speicherung der numerischen Informationen, die den durch den Messaufnehmer in Multiplexform gelieferten repräsentativen Signalen entsprechenden, aufweist und Mittel, aufweist und Mittel, um die Messaufnehmer während Zeitspannen Tᵢ abwechselnd mit dem ersten und dem zweiten Pufferspeicher zu verbinden sowie Mittel, um während der Zeitspannen Tᵢ denjenigen der Pufferspeicher mit den besagten Verarbeitungsmitteln zu verbinden, der nicht mit dem Messaufnehmer verbunden ist.

7. System nach Anspruch 5 oder 6, **dadurch gekennzeichnet, dass** die Zeitspanne Tᵢ ungefähr so groß ist wie die Zeitspanne T.

8. System nach einem der Ansprüche 1 bis 7, **dadurch gekennzeichnet, dass** sich das Verhältnis k zwischen den Zeitspannen T und T' zu zwischen 5 und 15 ergibt.

9. System nach Anspruch 3, **dadurch gekennzeichnet, dass** die Bandbreiten der P Filtermittel sich im Bereich zwischen 0 und 300 Hertz befinden.

## Claims

1. System for surveillance of a subterranean quarry comprising:
- N acoustic or seismic sensors (Cₖ) arranged in the said quarry, each sensor delivering a signal representing the amplitude of the acoustic or seismic signal which it receives; and
- means for processing the signals delivered by each sensor to deduce from them the possible supervention in the said quarry of a characteristic event, the said processing means comprising means for calculating the energy contained in the said representative signal during periods T through which is obtained noise data B; the said system being **characterised by** the fact that it also comprises:
- means for calculating the energy contained in the said representative signal during periods T' with T' = T/k,k a whole number greater than 1, through which energy data E is obtained;
- means for calculating the ratio R between the energy data E and the noise data B, and for comparing the value R of the said ratio with a pre-determined threshold S; the periods T' of calculation of the energy data (E) correspond to juxtaposed successive portions of the representative signal and the periods T of calculation of the noise data (B) correspond to successive portions of the representative signal shifted by an interval equal to T'; and
- means for storing the energy data E if the value R of the ratio is greater than the threshold S.

2. System as described in claim 1, **characterised by** the fact that the said processing means are defined to operate in real time.

3. System as described in any one of claims 1 and 2, **characterised by** the fact that it also comprises P filtering means each centred on different frequencies, to filter the representative signal delivered by each sensor, through which P filtered signals are obtained, and by the fact that:
- the means for energy calculation calculate energy during the periods T and T' for each of the P filtered signals, through which P noise data B₁ and P energy data E₁ are obtained
- the means for calculating the ratio R and for comparison calculate P ratios R₁ and compare the said ratios with thresholds S₁.
- the storing means store the energy data E₁ if the value of the ratio R₁ is greater than S₁ and the data relative to the corresponding filter.

4. System as described in any one of claims 1 to 3, **characterised by** the fact that it also comprises:
- means for accumulating the energy data (E, E₁) stored during a period D, through which accumulated energy data (H, H₁) are obtained, and
- means for storing the said accumulated energy data.

5. System as described in any one of claims 1 to 4, **characterised by** the fact that it also comprises, for each sensor, two buffer memories able to store digital data corresponding to the representative signal delivered by the sensor, means for alternately linking the said sensor to the first and to the second buffer memory for periods T₁ and means for alternately linking to the said processing means for periods T₁ the one of the buffer memories which is not linked to the sensor.

6. System as described in any one of claims 1 to 4, **characterised by** the fact that it also comprises two buffer memories able to store the digital data corresponding to the representative signals delivered by the sensors in multiplexed form, means for alternately linking the said sensors to the first and to the second buffer memory for periods T₁ and means for alternately linking to the said processing means for periods T₁ the one of the buffer memories which is not linked to the sensor.

7. System as described in claims 5 and 6, **characterised by** the fact that the said period T₁ is substantially equal to the period T.

8. System as described in any one of claims 1 to 7, **characterised by** the fact that the ratio k between the periods T and T' is between 5 and 15.

9. System as described in claim 3, **characterised by** the fact that the pass-bands of the P filtering means are within the range of from 0 to 300 Hertz.
